# EUROPÄISCHE PATENTSCHRIFT

(11) **EP 3 927 971 B1**
(45) Veröffentlichungstag und Bekanntmachung des Hinweises auf die Patenterteilung: **03.04.2024**
(21) Anmeldenummer: 20706220.9
(22) Anmeldetag: 19.02.2020
(51) Int. Cl.: F04B 1/04, F04B 13/00, B65B 3/00, B65B 3/32, F16K 15/14

(54) **FÜLLVORRICHTUNG ZUM ABFÜLLEN EINER DEFINIERTEN MENGE EINES PRODUKTS**
FILLING APPARATUS FOR FILLING A DEFINED AMOUNT OF A PRODUCT
DEDISPOSITIF DE REMPLISSAGE À REMPLIR UNE QUANTITÉ DÉFINIE D'UN PRODUIT

(30) Priorität: 22.02.2019 DE 102019202416
(43) Veröffentlichungstag der Anmeldung: 29.12.2021
(73) Patentinhaber: Syntegon Technology GmbH, 71332 Waiblingen (DE)
(72) Erfinder: BAEUERLE, Johannes, 74423 Obersontheim (DE)
(74) Vertreter: DREISS Patentanwälte PartG mbB
(86) Internationale Anmeldenummer: PCT/EP2020/054276
(87) Internationale Veröffentlichungsnummer: WO 2020/169627

(56) Entgegenhaltungen:
- DE-A1- 2 520 849
- DE-A1-102007 036 265
- DE-A1-102016 213 847
- DE-A1-102016 215 875

## Beschreibung

### Stand der Technik

Die vorliegende Erfindung betrifft eine Füllvorrichtung zum Abfüllen einer definierten Menge eines Produkts, insbesondere eines pharmazeutischen Produkts, mit einer Kolbenpumpe.

In der Pharmaindustrie müssen verschiedene, insbesondere flüssige Wirkstoffe, in definierten Mengen mit sehr engen Toleranzen in Behältnisse, wie z.B. Flaschen oder Vials oder ähnliches, abgefüllt werden. Hierbei sind Füllsysteme bekannt, welche einen Edelstahlbehälter aufweisen, in welchem das abzufüllende Produkt eingefüllt wird und über Leitungen zu einem Verteilerrohr oder dgl. führt, an welchem eine oder mehrere Abfülleinrichtungen in Form von Schläuchen, an deren Ende jeweils eine Füllnadel angeordnet ist, vorgesehen sind. Auch ist hierbei eine Drossel angeordnet, durch welche der abzufüllende Wirkstoff hindurchgeführt wird. Die Drosseln müssen dabei je nach Anwendung ausgewählt werden und sind Bauteile mit engsten Toleranzen, um eine hohe Genauigkeit bei der Abfüllung sicherzustellen. Von daher sind derartige Drosseln sehr teuer. Da in der pharmazeutischen Industrie häufig wechselnde Produkte abgefüllt werden, müssen Kreuzkontaminationen verhindert werden. Dies erfordert einen hohen Reinigungsaufwand und insbesondere bei Sterilprodukten einen sehr großen Aufwand. Von daher werden auch verstärkt Einwegprodukte verwendet. Eine derartige Füllvorrichtung mit einer als Einwegartikel ausgebildeten Baugruppe zur Abfüllung ist aus der DE 102008001204 A1 bekannt. Hierbei hängt jedoch die Genauigkeit der Abfüllung von der Ansteuerung eines Absperrventils ab. Eine gattungsgemäße Vorrichtung ist auch aus der DE 102016215875 A1 bekannt.

DE 10 2016 213 847 A1 und DE 25 20 849 A1 zeigen jeweils eine Vorrichtung mit Merkmalen des Anspruchs 1.

Es ist Aufgabe der vorliegenden Erfindung, die Gefahr einer möglichen Leckage weiter zu minimieren und gleichzeitig die Dosiergenauigkeit zu verbessern. Diese Aufgabe wird gelöst durch die Merkmale des unabhängigen Anspruchs.

### Offenbarung der Erfindung

Die erfindungsgemäße Füllvorrichtung zum Abfüllen einer definierten Menge eines Produkts mit den Merkmalen des Anspruchs 1 weist demgegenüber den Vorteil auf, dass eine sehr kostengünstige Kolbenpumpe bereitgestellt werden kann. Weiterhin ist erfindungsgemäß eine hochgenaue Dosierung von vorbestimmten Mengen des Produkts möglich, so dass die Füllvorrichtung insbesondere bei der Abfüllung von medizinischen Produkten, insbesondere flüssigen oder pastösen Produkten, verwendbar ist. Die Verwendung der Kolbenpumpe stellt ferner sicher, dass die Füllvorrichtung unabhängig ist von einem Zustand einer vorhandenen Produktvorlage, da die Kolbenpumpe einen eigenen Ansaugtakt bereitstellt. Weiterhin kann eine hochgenaue Dosierung ermöglicht werden, da eine Dosierung durch nur einen einzigen Einmalhub realisiert werden kann. Die Gefahr einer möglichen Leckage während des Betriebs kann minimiert werden, da sich die Verbindungsstelle außerhalb des Zylinders bei nahezu Umgebungsdruck befindet. Durch die Anordnung des Zulaufs und Ablaufs mit einem Winkel in einem Bereich zwischen 30° und 70° gegenüber einer Achse des Zylinderkörpers geneigt kann der Totraum minimiert werden. Dadurch kann eine schnellere und sichere Entlüftung erreicht werden. Außerdem verbessert sich dadurch die Dosiergenauigkeit. Insbesondere durch die unterschiedliche Ausbildung der Rückschlagventile kann die Dosiergenauigkeit weiter optimiert werden. Gerade bei der Verwendung eines Schirmventils und eines Schnabelventils kann zum einen der Einlassventilöffnungsdruck minimal, der Auslassöffnungsdruck entsprechend hoch gewählt werden.

In einer zweckmäßigen Weiterbildung umfasst der Zylinderkörper zumindest einen Wandbereich zur Befestigung zumindest einer Tülle. Damit wird die Gefahr von Leckagen verringert, da der Befestigungspunkt in den Außenbereich des Zylinderkörpers verlegt wird. Außerdem lassen sich relativ schnelle Anpassungen an unterschiedlichen Schlauchgeometrie über unterschiedliche Tüllen erreichen. Gemäß einer zweckmäßigen Weiterbildung weist der Wandbereich zumindest eine Verbindungsstelle für eine Tülle und/oder zumindest eine Aufnahmefläche für eine Dichtung auf. Damit erhöht sich die Flexibilität der Anordnung und reduziert durch das Vorsehen einer Dichtung die Gefahr von Leckagen.

In einer zweckmäßigen Weiterbildung werden unterschiedliche Rückschlagventile verwendet, insbesondere ist das Rückschlagventil im Ablauf als Schirmventil und/oder das Rückschlagventil im Zulauf als Schnabelventil, ein Ventil mit einem schnabelförmigen Bereich zum Öffnen und Schließen, ausgebildet. Dadurch kann der Einlassventilöffnungsdruck minimal, der Auslassöffnungsdruck entsprechend hoch eingestellt werden, sodass die Füllgenauigkeit verbessert werden kann.

In einer zweckmäßigen Weiterbildung ist eine Öffnung in dem Zylinderkörper vorgesehen zur Aufnahme des Rückschlagventils. Insbesondere ist diese Öffnung zwischen einem Innenraum des Zylinderkörpers und einem Zulauf bzw. Ablauf angeordnet. Dadurch kann bei einer schnellen und flexiblen Montage der geeigneten Ventiltypen je nach Anwendungsfall immer auf denselben Zylinderkörper zurückgegriffen werden.

In einer zweckmäßigen Weiterbildung ist vorgesehen, dass das Rückschlagventil zumindest eine Außenfläche des Wandbereichs des Zylinderkörpers zumindest teilweise überdeckt, sodass die Tülle unmittelbar auf das Rückschlagventil, insbesondere auf einen Flansch des Rückschlagventils, einwirkt. Damit kann eine unmittelbare Abdichtung zwischen Tülle und Zylinderkörper ohne Verwendung einer zusätzlichen Dichtung erreicht werden.

In einer zweckmäßigen Weiterbildung ist zwischen Tülle und Zylinderkörper eine Dichtung angeordnet und bevorzugt weist der Zylinderkörper entsprechende Aufnahmeflächen auf. Damit wird eine sichere Abdichtung erreicht und gleichzeitig die Dichtung in der gewünschten Position gehalten.

In einer zweckmäßigen Weiterbildung weist der Innenraum im Wesentlichen einen trapezförmigen Querschnitt auf. Dadurch werden Toträume vermieden. Dies trägt zu einer schnelleren und sicheren Entlüftung bei. Dadurch erhöht sich die Füllgenauigkeit.

In einer zweckmäßigen Weiterbildung bilden die Kolbenpumpe, die Füllnadel und die Verbindungsleitung eine Baugruppe, die als Einwegartikel ausgebildet ist. Dadurch kann die Baugruppe nach Gebrauch einfach entsorgt werden. Um die Kosten der Füllvorrichtung gering zu halten, sind der Zylinderkörper, der Kolben, der Zylinderdeckel, der Zulauf, der Ablauf, die Tüllen und das erste und zweite Rückschlagventil aus einem nichtmetallischen Werkstoff hergestellt. Dadurch können Kreuzkontaminationen bei der Abfüllung verschiedener pharmazeutischer Produkte nacheinander vermieden werden. Denn bei Reinigungsprozessen, welche bei mehrfach verwendbaren Anlagen durchgeführt werden müssen, kann nie sichergestellt werden kann, dass eine absolute Reinheit auch nach Reinigung vorhanden ist. Somit ist die Erfindung insbesondere für toxische Anwendungen geeignet. Weiterhin müssen die Bauteile der Füllvorrichtung nicht vorbereitet werden, da die Kolbenpumpe an sich schon in der Füllvorrichtung vormontiert ist. Dadurch reduziert sich der Montageaufwand, so dass minimale Prozesskosten entstehen. Auch entstehen keine Kosten für die Reinigung oder dgl.

Die erfindungsgemäße Füllvorrichtung wird besonders bevorzugt zur Abfüllung von pharmazeutischen Produkten, insbesondere Flüssigkeiten oder pastöse Produkte, verwendet.

Weitere zweckmäßige Weiterbildungen ergeben sich aus weiteren abhängigen Ansprüchen und aus der Beschreibung.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht einer Füllvorrichtung gemäß einem bevorzugten Ausführungsbeispiel der Erfindung,
- Figur 2: eine schematische Schnittansicht einer Kolbenpumpe von Figur 1 sowie
- Figur 3: eine vergrößerte Schnittansicht des oberen Bereichs der Kolbenpumpe gemäß Figur 2.

### Bevorzugte Ausführungsform der Erfindung

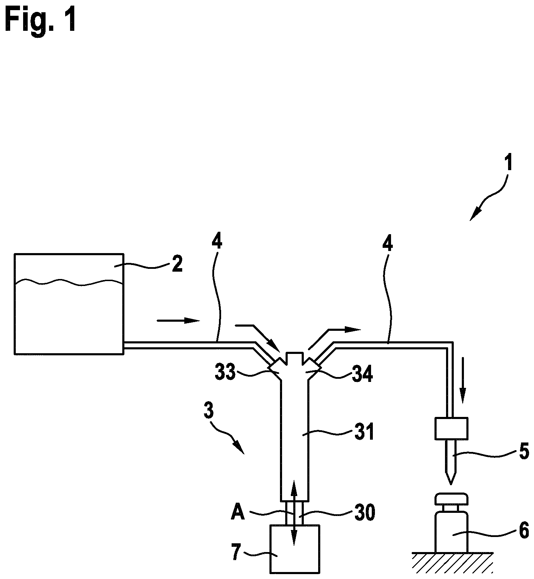

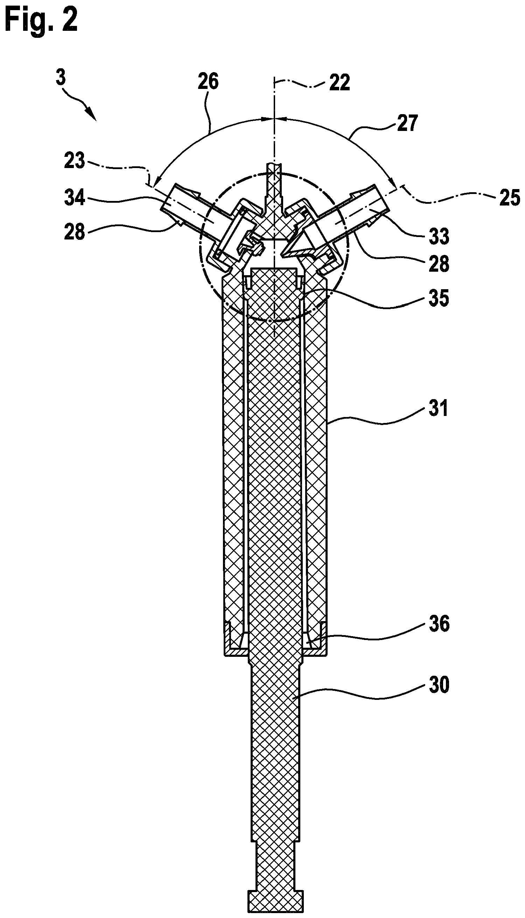

Nachfolgend wird unter Bezugnahme auf die Figuren 1 bis 3 eine Füllvorrichtung 1 gemäß einem ersten bevorzugten Ausführungsbeispiel der Erfindung im Detail beschrieben.

Wie aus Figur 1 ersichtlich ist, umfasst die Füllvorrichtung 1 einen Speicher 2, in welchem ein abzufüllendes Produkt gespeichert ist. Das abzufüllende Produkt ist vorzugsweise ein pharmazeutisches Produkt, beispielsweise ein Medikament.

Der Speicher 2 ist über eine Verbindungsleitung 4 mit einer Füllnadel 5 verbunden, welche als Dosiereinrichtung das abzufüllende Produkt in Behältnisse 6, beispielsweise Vials oder dgl., abfüllt.

In der Verbindungsleitung 4 ist eine Kolbenpumpe 3 angeordnet, welche einen oszillierenden Kolben 30 umfasst. Dies ist in Figur 1 durch den Doppelpfeil A angedeutet. Der Kolben 30 ist in einem Zylinderkörper 31 hin- und hergehend angeordnet.

Die Kolbenpumpe 3 wird mittels eines Antriebs 7 angetrieben.

Ein Zylinderkörper 31 umschließt zumindest teilweise einen Kolben 30. Im unteren Bereich des Zylinderkörpers 31 ist ein Führungselement 36 vorgesehen zur Führung des Kolbens 30. Der Zylinderkörper 31 bzw. der Kolben 30 weist eine entlang der Zylinderachse orientierte Achse 22 auf.

Im oberen Bereich des Zylinderkörpers 31 sind zumindest ein Zulauf 33 und ein Ablauf 34 vorgesehen. Der insbesondere rohrförmige Abschnitt des Zulaufs 33 weist eine Achse 25 auf. Die Achse 25 des Zulaufs 33 ist mit einem von Null verschiedenen Winkel 26 geneigt gegenüber der Achse 22 des Zylinderkörpers 31 ausgebildet. Eine Achse 23 des Ablaufs 34 ist mit einem von Null verschiedenen Winkel 27 geneigt gegenüber der Achse 22 des Zylinderkörpers 31 ausgebildet. Vorzugsweise sind die beiden Winkel 26, 27 nahezu identisch ausgebildet. Im Ausführungsbeispiel handelt es sich bei den Winkeln 26, 27 um spitze Winkel, also in einem Winkelbereich zwischen 0° und 90°. Besonders bevorzugt liegt der Winkel 26, 27 in einem Bereich zwischen 20° und 70°, im Ausführungsbeispiel hat sich ein Winkel von ca. 57,5° besonders bewährt.

Nach der Erfindung liegt der Winkelbereich zwischen 30° und 70° gegenüber einer Achse des Zylinderkörpers geneigt. Der Zulauf 33 und/oder der Ablauf 34 umfasst jeweils eine Tülle 28 bzw. eine Schlauchtülle zur Befestigung der Verbindungsleitung bzw. eines Schlauchs.

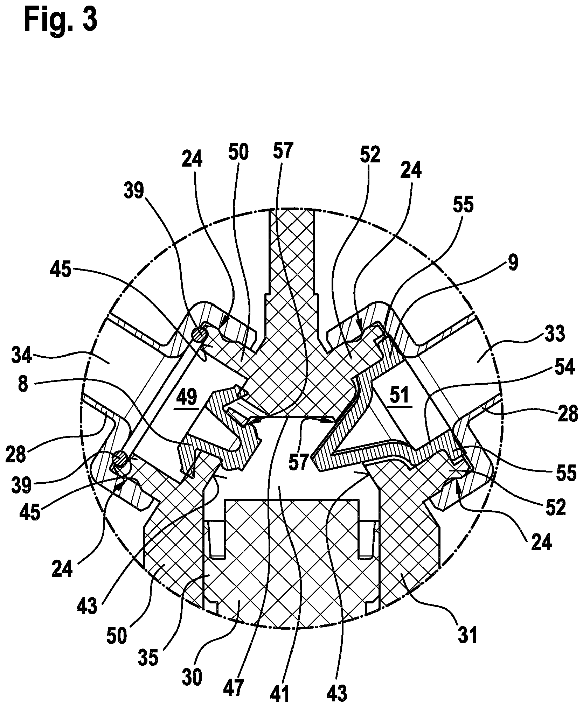

Die Tülle 28 ist mit dem Zylinderkörper 31 über eine Verbindungsstelle 24 verbunden bzw. verbindbar wie in der Detailansicht gemäß Figur 3 genauer gezeigt. Der Zylinderkörper 31 läuft nach oben hin in einem Innenraum 41 aus.

Der Innenraum 41 besitzt im Wesentlichen einen trapezförmigen Querschnitt.

Der trapezförmige Querschnitt ist nicht axial symmetrisch, sondern nur im Schnitt der dargestellten Schnittrichtung vorhanden. In diesen Innenraum 41 münden Zulauf 33 und Ablauf 34 jeweils in Mündungsflächen 43. Diese Mündungsflächen 43 sind konisch bzw. kegelförmig ausgebildet. Die Mündungsflächen 43 sind gegenüber der Achse 22 geneigt ausgebildet. Die Mündungsflächen 43 stehen im Wesentlichen senkrecht auf den Achsen 25, 23 von Zulauf 33 bzw. Ablauf 34.

Zur Aufnahme des Rückschlagventils 8 ist eine entsprechende Öffnung 57 zwischen der Mündungsfläche 43 und einer Ausnehmung 49 vorgesehen. Insbesondere sind die Öffnungen 57 zwischen dem Innenraum 41 und dem Zulauf 33 bzw. Ablauf 34 angeordnet. Hierbei kann es sich beispielsweise um eine zylindrische Aufnahmebohrung handeln. Im Ausführungsbeispiel ist als Rückschlagventil 8 für den Ablauf 34 ein Schirmventil vorgesehen. Die schirmförmigen Abschnitte überdecken eventuelle Öffnungen zwischen dem Ablauf 34 und dem Innenraum 41. Für die Aufnahme des Rückschlagventil 9, insbesondere als Schnabelventil ausgeführt, ist zum einen eine Ausnehmung 51 vorgesehen. Diese Ausnehmung 51 ist im Wesentlichen zylinderförmig ausgebildet. Die Ausnehmung 51 ist im Wesentlichen an den zylindrischen Abschnitt 54 des Rückschlagventils 9 angepasst. Zur Durchführung des schnabelförmigen Bereichs des Rückschlagventil 9 ist zwischen der Ausnehmung 51 und dem Innenraum 41 eine Öffnung 57 vorgesehen. Diese Öffnung 57 mündet in der Aufnahmefläche 43 in den Innenraum 41.

Bei der Verwendung eines Schnabelventils ist der Einlassventilöffnungsdruck minimal. Bei der Verwendung eines Schirmventils ist der Auslassventilöffnungsdruck entsprechend hoch. Damit kann die Füllgenauigkeit optimiert werden.

Das Rückschlagventil 8 weist an dem zum Innenraum 41 orientierten Ende eine Verdickung auf mit etwas größerem Durchmesser als die das Rückschlagventil 8 umgebende Öffnung der Mündungsflächen 43. Dies dient der Fixierung des Rückschlagventils 8. Die Verdickung und der Schirm bilden zusammen mit einer entsprechenden Höhe der Aufnahmebohrung bzw. Öffnung 57 die Ventilvorspannung. Für die einfache Montage des Rückschlagventil 8 ist eine kegelförmige Aussparung an der Oberseite des Schirmventils vorgesehen, in die das Montagewerkzeug eingeführt werden kann. Hierzu ist das Rückschlagventil 8 aus einem elastischen Material ausgebildet (beispielsweise ein Kunststoff oder eine Kautschukmischung wie VMQ) und kann durch die Öffnung der Mündungsflächen von außen hindurch gesteckt werden.

Auf der Seite des Ablaufs 34 läuft der Zylinderkörper 31 in der Ausnehmung 49 aus. Die Ausnehmung 49 fluchtet mit der Tülle 28. Die zu dosierende Flüssigkeit gelangt über vom Innenraum 41 über das Rückschlagventil 8, die Ausnehmung 49 sowie den Ablauf 34 mit der Tülle 28 zur Verbindungsleitung 4. Am Außenbereich des Zylinderkörpers 31 eines Wandbereichs 50, welcher die Ausnehmung 49 seitlich begrenzt, ist eine Verbindungsstelle 24 vorgesehen. Bei der Verbindungsstelle 24 des Zylinderkörpers 31 handelt es sich beispielsweise um eine außenliegende Vertiefung oder Rille. Diese Verbindungsstelle 24 wirkt mit einem entsprechenden Überstand des Endabschnitts der Tülle 28 zusammen. Der Endabschnitt der Tülle 28 weitet sich etwas und umschließt den Wandbereich 50 des Zylinderkörpers 31 im Bereich der Ausnehmung 49. Dies wäre beispielsweise denkbar, wenn keine Dichtung 39 verwendet wird. Die Verbindungsstelle 24 ist beispielsweise Teil einer Clipsverbindung. Alternative Verbindungsmöglichkeiten sind denkbar. Beispielsweise könnte die Verbindung zwischen Tülle 28 und Zylinderkörper 31 auch durch Schweißen bzw. Laserschweißen, eine Schraubverbindung oder Ähnliches erfolgen.

Am Endabschnitt des Wandbereichs 50 ist eine Aufnahmefläche 45 vorgesehen. Die Aufnahmefläche 45 dient der Aufnahme einer Dichtung 39. Die Dichtung 39 ist beispielsweise als O-Ring ausgebildet. Die Dichtung 39 dient der Abdichtung zwischen Zylinderkörper 31 und Tülle 28. Die Aufnahmefläche 45 für die Dichtung 39 ist an die Außenkontur der Dichtung 39 angepasst. Im Ausführungsbeispiel handelt es sich beispielsweise um eine teilkreisförmige bzw. ringförmige Kontur. Die Dichtung 39 könnte entfallen, wenn die aufgeclipste Tülle 28 unter Spannung verbaut ist.

Der Zylinderkörper 31 ist im Bereich des Zulaufs 33 ähnlich wie im Bereich des Ablaufs 34 ausgebildet. Wiederum ist eine Ausnehmung 51 vorgesehen, die seitlich von Wandbereichen 52 des Zylinderkörpers 31 gebildet wird. Am äußeren Bereich des Wandbereichs 52 ist zumindest eine Verbindungsstelle 24 vorgesehen zur Verbindung der Tülle 28 mit dem Zylinderkörper 31. Bei der Verbindungsstelle 24 des Zylinderkörpers 31 handelt es sich beispielsweise um eine außenliegende Vertiefung oder Rille. Diese Verbindungsstelle 24 wirkt mit einem entsprechenden Überstand des Endabschnitts der Tülle 28 zusammen. Der Endabschnitt der Tülle 28 weitet sich etwas und umschließt den Wandbereich 52 des Zylinderkörpers 31 im Bereich der Ausnehmung 51. Die Verbindungsstelle 24 ist beispielsweise Teil einer Clipsverbindung. Alternative Verbindungsmöglichkeiten sind denkbar. Beispielsweise könnte die Verbindung zwischen Tülle 28 und Zylinderkörper 31 auch durch Schweißen bzw. Laserschweißen oder Ähnliches erfolgen.

Das Rückschlagventil 9 ist im Ausführungsbeispiel als Schnabelventil ausgebildet. Als Schnabelventil wird ein Ventil bezeichnet, dessen Ventilfunktion über einen sich öffnenden bzw. schließenden Schnabel bzw. übereinanderliegende Lippen gebildet wird. Der schnabelförmige Teil des Rückschlagventils 9 wird von einer entsprechenden Öffnungsgeometrie bzw. Öffnung 57 des Zylinderkörpers 31 umgeben, die der Schnabelform des Rückschlagventil 9 entspricht. Dadurch wird der Totraum minimiert. Das Schnabelventil bzw. Rückschlagventil 9 läuft zum gegenüberliegenden Ende hin in einem zylinderförmigen Abschnitt 54 aus. Das Ende des zylinderförmigen Abschnitts 54 läuft in einem Flansch 55 aus. Der zylinderförmige Abschnitt 54 und der Flansch 55 werden durch entsprechende Geometrien des Wandbereichs 52 aufgenommen. Der Flansch 55 bzw. dessen dem Innenraum 41 abgewandten Stirnseite wirkt zusammen mit dem sich verbreiternden Endabschnitt der Tülle 28. Der Endabschnitt der Tülle 28 umgreift sowohl den Endabschnitt des Rückschlagventils 9 wie auch den Außenbereich des Wandabschnitts 52 des Zylinderkörpers 31. Dadurch erfolgt eine Abdichtung zwischen Tülle 28 und Zylindergehäuse 31, insbesondere unter Verwendung des Rückschlagventils 9, besonders bevorzugt unter Verwendung des Schnabelventils bzw. dessen Flanschabschnitt 55. Auf eine separate Dichtung kann hierbei verzichtet werden. Hierbei sollte die aufgeclipste Tülle 28 unter Spannung verbaut sein.

Der Innenraum 41 wird durch eine Stirnfläche 47 begrenzt. Die Stirnfläche 47 ist quer zur Achse 22 orientiert. Die Stirnfläche 47 ist vorzugsweise plan ausgebildet. Durch die gewählte Geometrie des Innenraums 41 ist sichergestellt, dass sich fast keine Toträume ausbilden. Dadurch kann eine schnellere und sichere Entlüftung erreicht werden. Außerdem trägt dies zu einer verbesserten Füllgenauigkeit bei.

Die Verbindungsstelle 24 ist in einem außenliegenden Wandbereich 50, 52 zwischen Zylinderkörper 31 und Tülle 28 vorgesehen. Die Gefahr einer möglichen Leckage während des Betriebs wird minimiert, da die Verbindungsstelle 24 außerhalb des Zylinderkörpers 31, insbesondere an den außen liegenden Wandbereichen 50, 52 verschoben wurde, die nahezu dem Umgebungsdruck ausgesetzt ist.

Die beiden Rückschlagventile 8, 9 sind unterschiedlich ausgebildet. Dadurch wird erreicht, dass ein Ansaugvorgang und ein Fördervorgang in Abhängigkeit von einer Bewegungsrichtung des Kolbens 30 ermöglicht wird. Die Rückschlagventile 8, 9 können aus einem geeigneten Kunststoff bestehen, beispielsweise aus einer Kautschukmischung wie VMQ (Vinyl-Methyl-Silikon) oder Ähnliches.

Am Kolben 30 ist integral eine Dichtung 35 ausgebildet, welche aus dem gleichen Material wie das Material des Kolbens 30 hergestellt ist. Bevorzugt wird als Material UHMW-Polyethylen, verwendet. Die umlaufende Dichtung 35 stellt dabei sicher, dass während des Ansaughubes, d.h., wenn der Kolben 30 in Richtung fort vom oberen Bereich des Zylinderkörpers 31, an dem sich Zulauf 33 bzw. Ablauf 34 befinden, bewegt wird und bei einer Druckbewegung, in welcher der Kolben 30 in Richtung zum oberen Bereich bewegt wird, eine Dichtheit zum Zylinderkörper 31 bereitgestellt wird. Auch die Dichtlippenvorspannung trägt zu einem großen Teil zur Abdichtung bei. Durch die Integration der Dichtung 35 in den Kolben 30 kann ein besonders kostengünstiger Aufbau erreicht werden. Die Dichtung 35 ist an einem vergrößerten Durchmesser des Kolbens 30 angeordnet. Auch für die Tülle 28 wird bevorzugt aus einem Kunststoff wie PE oder PP einem sonstigen Kunststoff hergestellt.

Da die Verbindungsleitungen 4, die Kolbenpumpe 3, Tüllen 28 und die Füllnadel 5 als Baugruppe vorgesehen sind, welche als Einwegartikel ausgebildet ist, ist die Dichtung 35 ausreichend dimensioniert, um eine Abdichtung der Kolbenpumpe für den Abfüllvorgang des im Speicher 2 gespeicherten Produkts sicherzustellen. Da nach Gebrauch die Baugruppe mit Verbindungsleitung 4, Tüllen 26, Kolbenpumpe 3 und Füllnadel 5 entsorgt wird, muss keine langlebige Dichtheit sichergestellt werden. Die Dichtheit muss lediglich für den Abfüllvorgang sichergestellt werden.

Damit der Kolben 30 sicher im Zylinderkörper 31 geführt ist, ist ferner ein Führungselement 36 vorgesehen. Das Führungselement 36 führt den Kolben 30 im Zylinderkörper 31. Das Führungselement 36 ist mittels einer Clips-Verbindung im Zylinderkörper angeordnet. Genauer ist die Clips-Verbindung an vom Zulauf 33 bzw. Ablauf 34 entfernten Ende des Zylinderkörpers 31 vorgesehen.

Somit kann erfindungsgemäße eine Einweg-Füllvorrichtung 1 bereitgestellt werden, bei der eine sehr kostengünstige Kolbenpumpe 3 verwendet werden kann. Hierbei kann die kostengünstige Kolbenpumpe 3, welche bevorzugt aus PEEK oder UHMW-Polyethylen, hergestellt ist, die gleichen Füllleistungen wie eine üblicherweise verwendete metallische Kolbenpumpe bereitstellen. Durch die Integration der Kolbenpumpe 3 in die Füllvorrichtung 1 kann ferner eine Unabhängigkeit von einem Zustand einer vorhandenen Produktvorlage sichergestellt werden. Weiterhin ist die Kolbenpumpe 3 derart eingerichtet, dass eine Befüllung des Behältnisses 6 durch einen Einmalhub ermöglicht wird. Hierdurch kann ein besonders genau dosiertes Volumen erreicht werden.

Da die Kolbenpumpe 3, die Tüllen 28, die Verbindungsleitungen 4 und die Füllnadel 5 eine Einweg-Baugruppe bilden, kann keine Kreuzkontamination bei aufeinanderfolgenden Abfüllvorgängen auftreten. Weiterhin kann auch ein schnellerer Produktwechsel auf der Füllvorrichtung erreicht werden. Auch ist keine Reinigung von Bauteilen der Füllvorrichtung notwendig.

Besonders bevorzugt wird die Baugruppe, umfassend die Kolbenpumpe 3, die Tüllen 28, die Verbindungsleitungen 4 und die Füllnadel 5 als vorsterilisiertes System geliefert, so dass die Baugruppe sofort nach Auspacken verwendbar ist. Die Dichtung 35 weist dabei bevorzugt eine Dichtlippe mit Vorspannung auf. Dadurch kann eine besonders sichere Abdichtung des Kolbens in dem Zylinderkörper 31 erreicht werden.

Durch die Ausbildung des ersten Rückschlagventils 8 als Schirmventil und des weiteren Rückschlagventils 9 als Schnabelventil muss für die Umsteuerung zwischen Füll- und Saugtakt kein spezielles mechanisches Steuerelement eingesetzt werden. Die Steuerung der Rückschlagventile 8, 9 erfolgt ausschließlich über den jeweils vorhandenen Druck in der Kolbenpumpe. Ein notwendiger Öffnungs- und Schließdruck für die Rückschlagventile 8,9 kann durch Wahl der jeweils verwendeten Ventilgeometrien des Schirmventils bzw. des Schnabelventils variiert werden. Hierbei sei angemerkt, dass durch die Wahl einer vorbestimmten Ventil-Vorspannung und Ventilgeometrie der Rückschlagventile 8, 9 eine Anpassung an eine Viskosität des abzufüllenden Produkts möglich ist. Somit kann eine Kolbenpumpe 3 realisiert werden, deren Rückschlagventile 8, 9 durch den Fluiddruck angesteuert werden.

Somit kann erfindungsgemäß eine Füllvorrichtung bereitgestellt werden, welche eine als Einwegartikel ausgebildete Baugruppe mit Kolbenpumpe 3, Tüllen, 28, Verbindungsleitungen 4 und Füllnadel 5 bereitstellt. Dabei kann eine Einwegkolbenpumpe verwendet werden, welche besonders kostengünstig herstellbar ist und eine im Vergleich mit Schlauchpumpen besonders hochgenaue Dosierung ermöglicht. Dabei muss auch keine Reinigung von produktberührenden Bauteilen mehr erfolgen, da die produktberührenden Bauteile als Einwegartikel entsorgt werden können. Dadurch entfällt auch die Gefahr von Kreuzkontaminationen bei der Abfüllung von insbesondere pharmazeutischen Produkten.

## Patentansprüche

1. Füllvorrichtung zum Abfüllen einer definierten Menge eines Produkts, umfassend:
- eine Kolbenpumpe (3), um das abzufüllende Produkt von einem Speicher (2) zu einer Füllnadel (5) zu fördern,
- wobei die Kolbenpumpe (3) einen Kolben (30), einen Zylinderkörper (31), einen Zulauf (33), einen Ablauf (34), ein erstes Rückschlagventil (8) und ein zweites Rückschlagventil (9) umfasst,
- wobei der Kolben (30), der Zylinderkörper (31), der Zulauf (33), der Ablauf (34), das erste Rückschlagventil (8) und das zweite Rückschlagventil (9) aus einem nichtmetallischen Werkstoff hergestellt sind,
**dadurch gekennzeichnet, dass**
- der Zulauf (33) und der Ablauf (34) mit einem Winkel (26,27) in einem Bereich zwischen 30° und 70° gegenüber einer Achse (22) des Zylinderkörpers (31) geneigt angeordnet sind,
- wobei der Zulauf (33) und der Ablauf (34) im oberen Bereich des Zylinderkörpers (31) angeordnet sind.

2. Füllvorrichtung nach Anspruch 1, wobei der Zylinderkörper (31) zumindest einen Wandbereich (50, 52) umfasst zur Befestigung zumindest einer Tülle (28).

3. Füllvorrichtung nach einem der vorhergehenden Ansprüche, wobei der Wandbereich (50,52) zumindest eine Verbindungsstelle (24) für eine Tülle (28) und/oder zumindest eine Aufnahmefläche (45) für eine Dichtung (39) aufweist.

4. Füllvorrichtung nach einem der vorhergehenden Ansprüche, wobei das eine Rückschlagventil (9) im Zulauf (33) und das weitere Rückschlagventil (9) im Ablauf (34) angeordnet sind.

5. Füllvorrichtung nach einem der vorhergehenden Ansprüche, wobei unterschiedliche Rückschlagventile (8,9) verwendet sind, insbesondere als Rückschlagventil (8) im Ablauf (34) ein Schirmventil und/oder als Rückschlagventil (9) im Zulauf (33) ein Schnabelventil verwendet ist.

6. Füllvorrichtung nach einem der vorhergehenden Ansprüche, wobei zumindest eine Öffnung (57) in dem Zylinderkörper (31) vorgesehen ist zur Aufnahme des Rückschlagventils (8,9).

7. Füllvorrichtung nach einem der vorhergehenden Ansprüche, weiterhin umfassend zumindest eine Tülle (28) für den Zulauf (33) oder Ablauf (34)

8. Füllvorrichtung nach einem der vorhergehenden Ansprüche, wobei das Rückschlagventil (9) zumindest eine Außenfläche des Wandbereichs (52) des Zylinderkörpers (31) zumindest teilweise überdeckt, so dass die Tülle (28) unmittelbar auf das Rückschlagventil (9), insbesondere auf einen Flansch (55) des Rückschlagventils (9), einwirkt.

9. Füllvorrichtung nach einem der vorhergehenden Ansprüche, wobei zwischen Tülle (28) und Zylinderkörper (31) zumindest eine Dichtung (39) angeordnet ist.

10. Füllvorrichtung nach einem der vorhergehenden Ansprüche, wobei der Zylinderkörper (31) zumindest einen Innenraum (41) aufweist, der einen im Wesentlichen trapezförmigen Querschnitt aufweist.

11. Füllvorrichtung nach einem der vorhergehenden Ansprüche, wobei der Zylinderkörper (31) zumindest eine Ausnehmung (49, 51) aufweist, wobei zwischen der Ausnehmung (49, 51) zumindest eine Aufnahme für das Rückschlagventil (8,9) vorgesehen ist, die in die Aufnahmefläche (45) bzw. den Innenraum (41) mündet.

12. Füllvorrichtung nach einem der vorhergehenden Ansprüche, weiterhin umfassend
- einen Speicher (2) zum Speichern des abzufüllenden Produkts,
- eine Füllnadel (5) zum Abgeben des abzufüllenden Produkts,
- eine Verbindungsleitung (4), um den Speicher (2) mit der Füllnadel (5) zu verbinden.

13. Füllvorrichtung nach einem der vorhergehenden Ansprüche, **dadurch gekennzeichnet, dass** die Kolbenpumpe (3), die Füllnadel (5), die Tülle (28) und die Verbindungsleitung (4) eine Baugruppe bilden, die als Einwegartikel ausgebildet ist.

## Claims

1. A filling device for dispensing a defined quantity of a product, comprising:
- a piston pump (3) for delivering the product to be dispensed from a reservoir (2) to a filling needle (5),
- the piston pump (3) comprising a piston (30), a cylinder body (31), an inlet (33), an outlet (34), a first non-return valve (8) and a second non-return valve (9),
- the piston (30), the cylinder body (31), the inlet (33), the outlet (34), the first non-return valve (8) and the second non-return valve (9) being made of a non-metal material,
**characterized in that**
- the inlet (33) and the outlet (34) are inclined at an angle (26, 27) in a range of between 30° and 70° relative to an axis (22) of the cylinder body (31),
- the inlet (33) and the outlet (34) being arranged in the upper region of the cylinder body (31).

2. The filling device according to claim 1, wherein the cylinder body (31) comprises at least one wall region (50, 52) for fastening at least one nozzle (28).

3. The filling device according to either of the preceding claims, wherein the wall region (50, 52) has at least one connection point (24) for a nozzle (28) and/or at least one receiving surface (45) for a seal (39).

4. The filling device according to any of the preceding claims, wherein one non-return valve (9) is arranged in the inlet (33) and the other non-return valve (9) is arranged in the outlet (34).

5. The filling device according to any of the preceding claims, wherein different non-return valves (8, 9) are used, in particular an umbrella valve is used as a non-return valve (8) in the outlet (34) and/or a duckbill valve is used as a non-return valve (9) in the inlet (33).

6. The filling device according to any of the preceding claims, wherein at least one opening (57) is provided in the cylinder body (31) for receiving the non-return valve (8, 9).

7. The filling device according to any of the preceding claims, further comprising at least one nozzle (28) for the inlet (33) or outlet (34)

8. The filling device according to any of the preceding claims, wherein the non-return valve (9) at least partially covers at least one outer surface of the wall region (52) of the cylinder body (31) so that the nozzle (28) acts directly upon the non-return valve (9), in particular on a flange (55) of the non-return valve (9).

9. The filling device according to any of the preceding claims, wherein at least one seal (39) is arranged between the nozzle (28) and the cylinder body (31).

10. The filling device according to any of the preceding claims, wherein the cylinder body (31) has at least one interior space (41) which has a substantially trapezoidal cross section.

11. The filling device according to any of the preceding claims, wherein the cylinder body (31) has at least one recess (49, 51), wherein at least one receptacle for the non-return valve (8, 9) is provided between the recess (49, 51) and opens into the receiving surface (45) or the interior space (41).

12. The filling device according to any of the preceding claims, further comprising
- a reservoir (2) for storing the product to be dispensed,
- a filling needle (5) for dispensing the product to be dispensed,
- a connecting line (4) to connect the reservoir (2) to the filling needle (5).

13. The filling device according to any of the preceding claims, **characterized in that** the piston pump (3), the filling needle (5), the nozzle (28) and the connecting line (4) form an assembly which is designed as a single-use item.

## Revendications

1. Dispositif de remplissage pour mettre en récipient une quantité définie d'un produit, comprenant:
- une pompe à piston (3) pour acheminer le produit à mettre en récipient depuis un réservoir (2) vers une aiguille de remplissage (5),
- dans lequel la pompe à piston (3) comprend un piston (30), un corps de cylindre (31), une entrée (33), une sortie (34), un premier clapet anti-retour (8) et un deuxième clapet anti-retour (9),
- dans lequel le piston (30), le corps de cylindre (31), l'entrée (33), la sortie (34), le premier clapet anti-retour (8) et le deuxième clapet anti-retour (9) sont réalisés à partir d'un matériau non métallique,
**caractérisé par le fait que**
- l'entrée (33) et la sortie (34) sont disposées de manière à être inclinées d'un angle (26, 27) compris entre 30° et 70° par rapport à un axe (22) du corps de cylindre (31),
- dans lequel l'entrée (33) et la sortie (34) sont disposées dans la zone supérieure du corps de cylindre (31).

2. Dispositif de remplissage selon la revendication 1, dans lequel le corps de cylindre (31) comprend au moins une zone de paroi (50, 52) pour fixer au moins un embout (28).

3. Dispositif de remplissage selon l'une quelconque des revendications précédentes, dans lequel la zone de paroi (50, 52) présente au moins un point de raccordement (24) pour un embout (28) et/ou au moins une surface de réception (45) pour un joint d'étanchéité (39).

4. Dispositif de remplissage selon l'une quelconque des revendications précédentes, dans lequel l'un des clapets anti-retour (9) est disposé dans l'entrée (33) et l'autre clapet anti-retour (9) est disposé dans la sortie (34).

5. Dispositif de remplissage selon l'une quelconque des revendications précédentes, dans lequel différents clapets anti-retour (8, 9) sont utilisés, en particulier un clapet parapluie est utilisé en tant que clapet anti-retour (8) dans la sortie (34) et/ou un clapet à bec est utilisé en tant que clapet anti-retour (9) dans l'entrée (33).

6. Dispositif de remplissage selon l'une quelconque des revendications précédentes, dans lequel au moins une ouverture (57) est prévue dans le corps de cylindre (31), qui est destinée à recevoir le clapet anti-retour (8, 9).

7. Dispositif de remplissage selon l'une quelconque des revendications précédentes, comprenant en outre au moins un embout (28) pour l'entrée (33) ou la sortie (34).

8. Dispositif de remplissage selon l'une quelconque des revendications précédentes, dans lequel le clapet anti-retour (9) recouvre au moins en partie au moins une surface extérieure de la zone de paroi (52) du corps de cylindre (31) de sorte que l'embout (28) agit directement sur le clapet anti-retour (9), en particulier sur une bride (55) du clapet anti-retour (9).

9. Dispositif de remplissage selon l'une quelconque des revendications précédentes, dans lequel au moins un joint d'étanchéité (39) est disposé entre l'embout (28) et le corps de cylindre (31).

10. Dispositif de remplissage selon l'une quelconque des revendications précédentes, dans lequel le corps de cylindre (31) présente au moins un volume intérieur (41) qui présente une section transversale pour l'essentiel trapézoïdale.

11. Dispositif de remplissage selon l'une quelconque des revendications précédentes, dans lequel le corps de cylindre (31) présente au moins un évidement (49, 51), dans lequel au moins un logement pour le clapet anti-retour (8, 9) est prévu entre l'évidement (49, 51), qui débouche dans la surface de réception (45) ou bien dans le volume intérieur (41).

12. Dispositif de remplissage selon l'une quelconque des revendications précédentes, comprenant en outre
- un réservoir (2) pour stocker le produit à mettre en récipient,
- une aiguille de remplissage (5) pour distribuer le produit à mettre en récipient,
- une conduite de raccordement (4) pour relier le réservoir (2) à l'aiguille de remplissage (5).

13. Dispositif de remplissage selon l'une quelconque des revendications précédentes, **caractérisé par le fait que** la pompe à piston (3), l'aiguille de remplissage (5), l'embout (28) et la conduite de raccordement (4) forment un ensemble qui est conçu en tant qu'article jetable.
